# EUROPEAN PATENT SPECIFICATION

(11) **EP 2 527 104 B1**
(45) Date of publication and mention of the grant of the patent: **08.01.2014**
(21) Application number: 11425137.4
(22) Date of filing: 24.05.2011
(51) Int. Cl.: B26D 7/00, B26F 1/38, B23Q 1/58, B25J 9/02, D06H 7/00, B26D 7/01

(54) **Automatic cutting machine for sheet material**
Automatische Schneidemaschine für Blechmaterial
Machine de découpe automatique pour matériau en feuilles

(43) Date of publication of application: 28.11.2012
(73) Proprietor: Orox S.r.L., 23870 Cernusco Lombardone (LC) (IT)
(72) Inventor: Zanesi, Roberto, 27100 Pavia (IT); Maiandi, Franco Luigi, 24030 Paladina (BG) (IT); Deleidi, Gianmario, 24061 Albano San'Alessandro (BG) (IT)
(74) Representative: Ferreccio, Rinaldo

(56) References cited:
- DE-A1- 4 226 292
- US-A- 4 998 442
- US-A- 5 832 801
- US-A- 5 975 743

## Description

### Field of application

The present invention refers to an automatic cutting machine for sheet material, of the type comprising a mobile portal above a cutting plane.

Such machines have useful application in particular in the textile manufacturing industry.

### Prior art

In the aforementioned industry cutting machines with a portal are used to carry out cutting operations on fabrics or leathers, generally stacked to form piles called *"lays"* in the industry jargon.

The machine comprises a frame that defines a cutting plane on top, either static or sliding according to the models, above which the lay to be cut is laid out enclosed between two containment sheets (generally made from cartene).

Under the cutting plane suction means are arranged that, since the lower containment sheet is perforated, keep the lay in position during the cutting operations.

Such cutting operations are carried out by means of a cutting head associated with the cross-member of the portal, which is able to reproduce even highly articulated cutting geometries transmitted to the machine by means of an interface processor. The cutting head is equipped with two degrees of freedom with respect to the cutting plane: the first due to the possibility of movement of the head with respect to the cross-member of the portal, the second linked to the possibility of longitudinal translation of the portal itself above the cutting plane.

The movement of the portal along the frame of the machine is generally permitted by a chain or belt transmission actuated by motor means arranged on the frame itself.

The machines of the type described combine high flexibility with high operating speed.

Nevertheless, whilst they substantially meet the requirements of the field, such machines have a series of drawbacks that are yet to be solved.

In particular, one drawback concerns the driving forward of the portal by means of the chain or belt transmission. Indeed, such a chain or belt must necessarily act upon one of the uprights of the cutting portal, with consequent problems due to the asymmetry of the point of application of the traction force. In order to avoid such problems it is thus necessary to make use of sophisticated transmission systems to distribute the force onto both of the uprights, at the expense of the cost-effectiveness and simplicity of construction of the machine.

Moreover, cutting machines according to the prior art are difficult to reconfigure, given the intimate functional connection of the portal with the rest of the structure.

Another drawback is the wiring that connects the portal with the electronic control devices of the machine. Indeed, the portal comprises a large number of electrical actuations or devices of another kind, responsible for the movement of the head and of the cutting tool associated with it. Each of such actuation systems must be connected

To a respective driver associated with it. Each of such actuation systems must be connected to a respective driver arranged on-board the machine: consequently there are a large number of connections with consequent problems linked to the hindrance and to the difficulty in reconfiguring the device.

A cutting machine of the above-mentioned type is disclosed for instance in prior art document US 5,975,743 A. A machine for cutting a glassplate having a similar layout is shown in document US 5,832,801 A. Finally, document US 4,998,442 discloses a gantry robot, which may be employed for laser cutting.

### Summary of the invention

The technical problem forming the basis of the present invention is, therefore, to devise a versatile and efficient cutting machine that allows the technical drawbacks of the prior art to be overcome.

The aforementioned technical problem is solved by a cutting machine in accordance with independent claim 1 of the present application.

A man skilled in the art will immediately realise how the proposed machine solves the problem of asymmetry of the traction force applied thanks to the use of two driving motors arranged in a mirroring fashion: since such motors are also directly arranged on the portal it is not necessary to implement elaborate motion transmission systems.

The structure that is devised is advantageously simple and efficient. It also allows all of the actuations of the machine to be combined, thus making it functionally autonomous. Such autonomy allows rapid configuration of the cutting machine, through replacement of the bed that defines the cutting plane or through addition of many portals on the same bed.

The dependent claims outlined preferred and particularly advantageous. embodiments of the product and of the method according to the invention, respectively.

### Brief description of the drawings

Figure 1 represents a schematic side view of an automatic cutting machine according to the present invention, sectioned along a longitudinal plane;
figure 2 represents a schematic side view of an automatic cutting machine according to an alternative embodiment of the present invention, sectioned along a longitudinal plane;
figure 3 schematically represents a detail of the automatic cutting machine of figure 1;
figure 4 schematically represents a detail of an automatic cutting machine according to an alternative embodiment of the present invention;
figure 5 schematically represents a detail of an automatic cutting machine according to an alternative embodiment of the present invention;
figure 6 represents a view from above of the portal of the automatic cutting machine of figure 1;

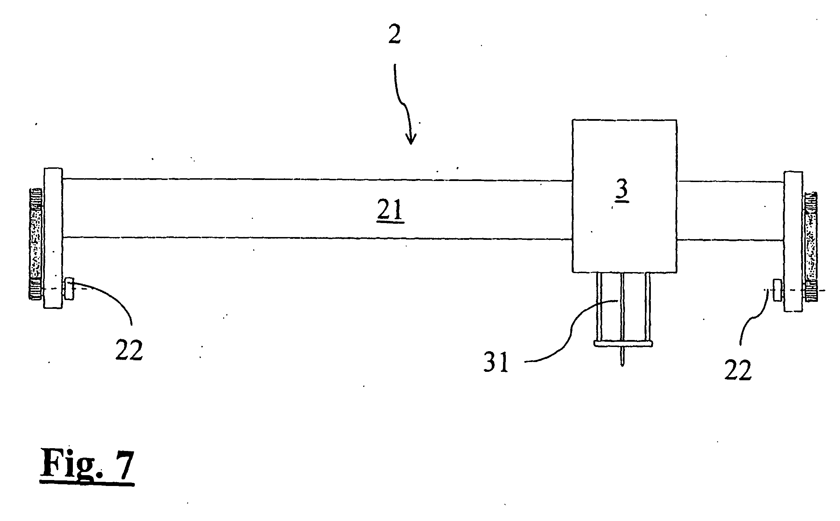

figure 7 represents a front view of the portal of the automatic cutting machine of figure 1;

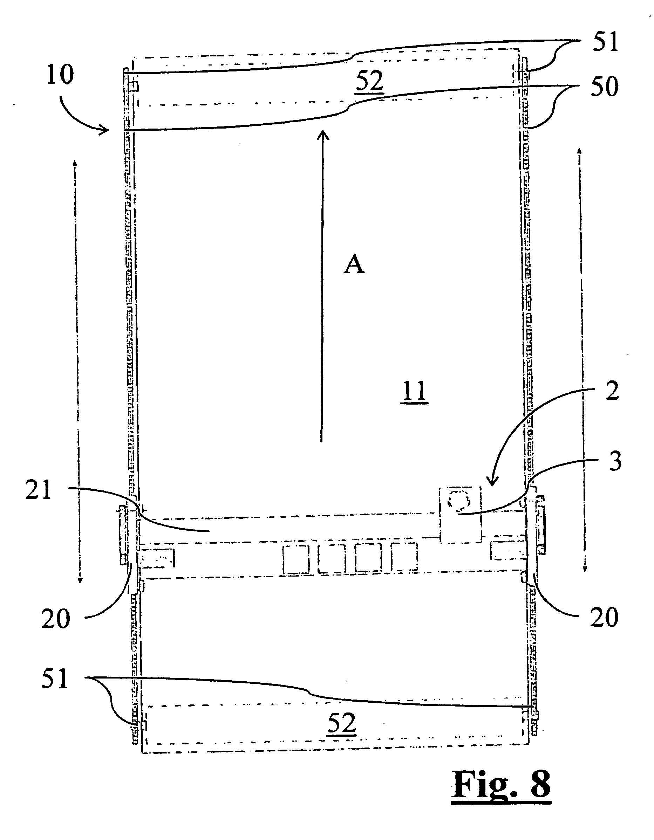

figure 8 represents a schematic view from above of the automatic cutting machine of figure 1;
figure 9 represents a schematic view from above of an automatic cutting machine according to an alternative embodiment of the present invention;
figure 10 represents a schematic view from above of an automatic cutting machine according to yet another alternative embodiment of the present invention;
figure 11 shows a detailed view of the detail schematically represented in figure 4;
figure 12 shows a section view of the detail of figure 11 taken according to the plane D-D defined there;
figure 13 shows a section view of the detail of figure 11 taken according to the plane B-B defined there;
figure 14 shows a section view of the detail of figure 11 taken according to the plane A-A defined there;
figure 15 shows a section view of the detail of figure 11 taken according to the plane E-E defined there;
figure 16 shows a section view of the detail of figure 11 taken according to the plane C-C defined there;
figure 17 shows a detailed section view of the detail of figure 5 taken according to the plane F-F defined there;
figure 18 shows a detailed view of the detail schematically represented in figure 3 in a first operative configuration;
figure 19 shows a section view of the detail of figure 18 taken according to the plane G-G defined there;
figure 20 shows the detail of figure 18 in a second operative configuration.

### Detailed description

With reference to the attached figures, with 1 we will generically indicate an automatic cutting machine for sheet material, henceforth identified as cutting machine.

The cutting machine is intended in particular for cutting leathers and fabrics, both in single sheets and stacked to form lays.

It should be noted that in the attached figures different embodiments of the cutting machine 1 according to the invention are represented. Such embodiments differ from one another just for a few constructive details, whereas the other elements that make up the machine remain unchanged. The following description refers to a main embodiment of the machine, with the possible modifications that make the alternative embodiments being identified as and when necessary. It should be noted that in the figures the same reference numerals have been used to identify analogous constituent elements in the different embodiments.

The cutting machine 1 comprises a fixed frame 10 that defines the bearing structure of the entire device.

The fixed frame 10 comprises a main support table 10a with rectangular plan, which supports the actual cutting machine 1.

The main support table 10a has a cutting plane 11 on top, which extends longitudinally from a feeding end 12 of the material to be cut to a discharge end 13 of said material.

The fixed frame 10 also comprises an auxiliary support table 10b, arranged downstream of the discharge end 13 of the cutting plane, which supports an auxiliary conveyor belt 14b intended to pick up the material processed by the cutting machine 1.

In the preferred embodiments described here, such a cutting plane 11 is defined by the upper surface of a main conveyor belt 14a intended to carry the material to be cut from the feeding end 12 to the discharge end 13, according to a direction of forward motion A.

Alternatively, the cutting plane 11 can be of the static type or defined by an upper horizontal surface of the fixed frame intended for the material to run on top of it.

Under the cutting plane 11 there is a suction device 15, housed in the fixed frame 10, intended to carry out a suction action through the upper surface, which is permeable to air, of the main conveyor belt 14a (or through the cutting plane 11). As specified in the description of the prior art, the suction action is used to ensure adherence and immobility of the material to be cut during the course of the cutting operations.

The suction device 15 comprises a compressor 16, of the known type, which sucks in the air above the cutting plane 11 expelling it towards the outside atmosphere through an expulsion channel 17. In the represented embodiments the compressor 16 is housed in the auxiliary table 10b of the fixed frame 10, whereas the expulsion channel 17 runs longitudinally through the entire extension of the main table 10a.

Advantageously, at the outlet of the expulsion chamber 17 there are known refrigerator means 18 intended to lower the temperature of the air coming out from the suction device.

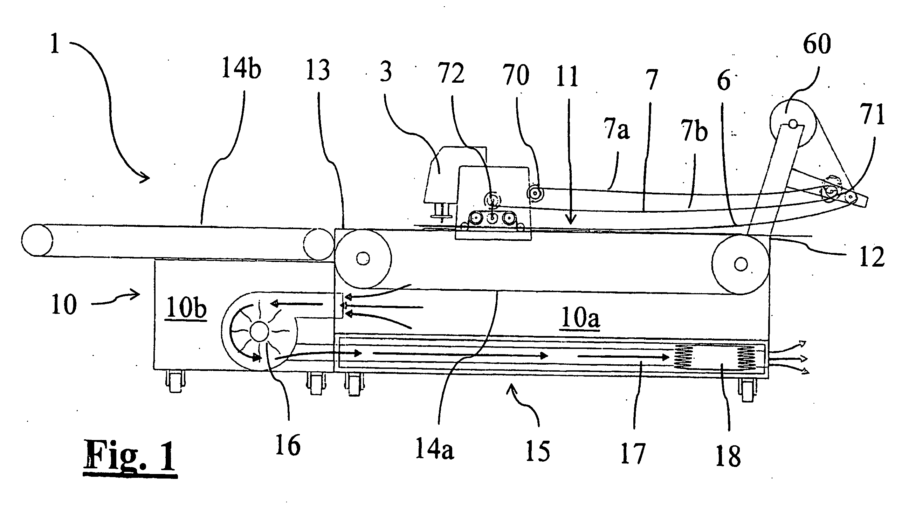

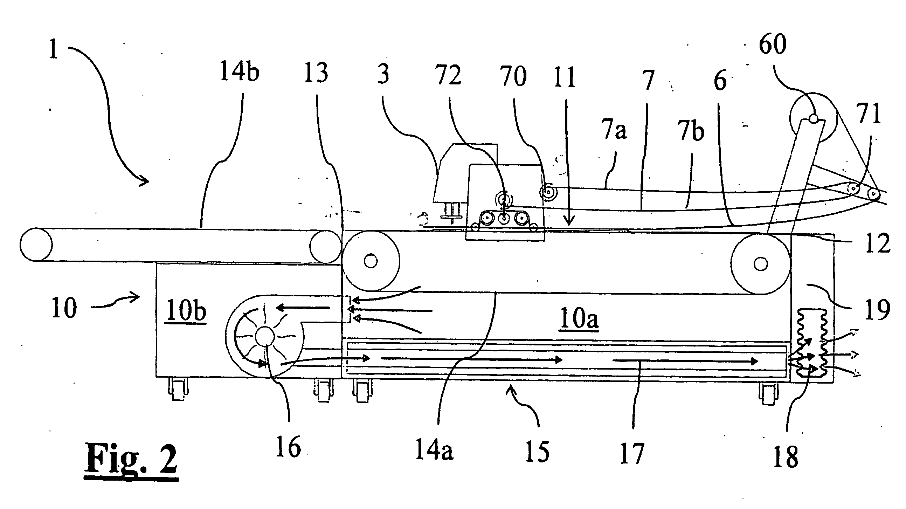

In the main embodiment illustrated in figure 1, such refrigerator means 18 are integrated in the expulsion chamber 17, i.e. contained inside the main table 10a of the fixed frame 10; the alternative embodiment illustrated in figure 2, on the other hand, provides an external refrigerating module 19 associated with the fixed frame 10 at the outlet of the expulsion chamber 17.

The cutting machine 1, in order to carry out the cutting operations on the material laid out on the cutting plane 11, comprises at least one cutting head 3 mounted on a portal 2 transversal to the main table 10a.

The portal 2, able to slide longitudinally above the cutting plane 11, comprises two side uprights 20 that move along the side edges of the main table 10a and a cross-member 21 that connects the side uprights 20 at the top and supports the cutting head 3.

The cutting head 3, of the known type, is mobile to slide along the cross-member 21. Such a movement is preferably promoted by an electric motor housed inside the cutting head 3 itself or on one of the two side uprights 20.

The cutting head 2 has a projecting portion from which a cutting tool 31 descends vertically. It should be noted that the projecting portion and the cutting tool 31 advantageously face forwards with respect to the cross-member 21 with reference to the direction of forward motion A defined earlier.

Actuator means preferably of the pneumatic type allow the cutting tool 31 to be raised or lowered above the cutting plane 11. Moreover, there are control motors, preferably electric, to rotate the cutting tool 31 along its vertical axis and to actuate it with alternate motion with respect to such an axis.

The side uprights 20 of the portal 2 are identical to one another in a mirroring fashion; the following description thus refers to a single side upright 20, with it being understood that the opposite upright has the same characteristics.

The side upright 20 consists of a vertical wall, preferably metallic, fixedly associated with the cross-member 2. We will say inner side of the side upright 20 to define the one facing towards the cross-member 2 or towards the other side upright 20, and we will call the opposite one the outer side.

Near to its lower end, at the inner side of the side upright 20 two roller wheels 22 are associated, resting on a rail 23 that runs along the side edge of the main table 10a.

The side upright has a driving motor 4, preferably of the electrical type, associated with it. The two driving motors 4 associated with the opposite side uprights 20 of the portal 2 allow, through transmission members arranged between motor and frame, the driving forwards of the portal 2 itself along the cutting plane 11, according to different ways according to the different embodiments described hereafter.

As can be seen from such embodiments, the groups made up of the driving motor 4 and of the relative transmission members preferably mirror one another with respect to the middle plane of the cutting machine 1.

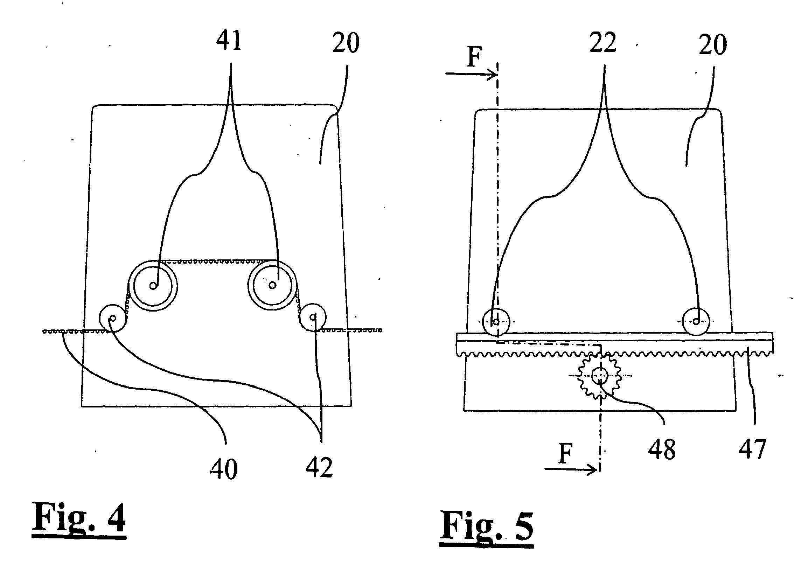

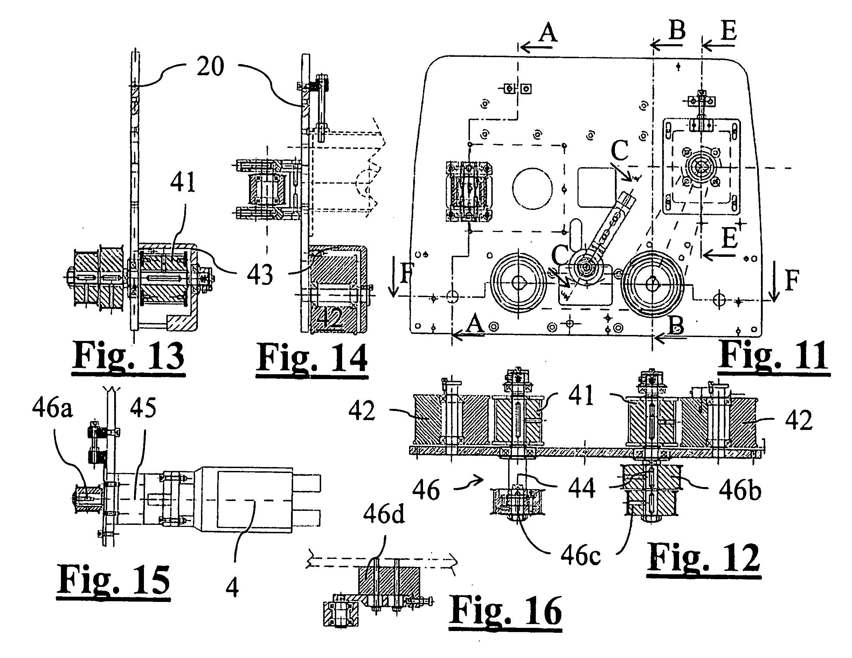

In a main embodiment, schematically illustrated in figure 4 and in greater detail in figures 11-16, the driving forward of the portal 2 is carried out by means of a system of pulleys cooperating with a driving belt 40 extending alongside the cutting plane 11 and fixedly connected to the fixed frame 10.

The system of pulleys comprises two transmission pulleys 41 and two deviation pulleys 42, all arranged on the inner side of the side upright 20. The deviation pulleys 42, arranged at the same height, are mounted idle near to the two side edges of the inner side. The transmission pulleys 41 are mounted on two shafts 44, arranged at the same height, which cross the side upright 20. The transmission pulleys 41 are slightly upwardly offset with respect to the deviation pulleys 42, and further inside with respect to them.

Given the configuration of the system of pulleys described above, proceeding in the direction of forward motion A first of all comes a deviation pulley 42, then the two transmission pulleys 41 and finally the second deviation pulley 42. The driving belt 40 winds around such pulleys passing under the first deviation pulley 42, then over the two transmission pulleys 41 and finally under the second deviation pulley 42.

The whole system of pulleys is enclosed inside a protective case 43 fixedly connected to the side upright 20.

The driving motor 4, associated with an axial speed reducer gearbox 45, is associated with the inner side of the side upright 20 and actuates the two transmission pulleys 41 by means of a belt transmission 46 arranged on the outer side of the side upright 20. Such a belt transmission comprises a first pulley 46a associated with the outlet of the axial speed reducer gearbox 45, a second pulley 46b rotating as a unit with one of the shafts 44 of the transmission pulleys 41, and two third pulleys 46c mounted on both of the shafts 44 and rotating as a unit with respect to them. The first pulley 46a is connected to the second pulley 46b by means of a first belt, whereas the third pulleys 46c are connected together by a second belt. An adjustable belt tightener 46d acts on the second belt.

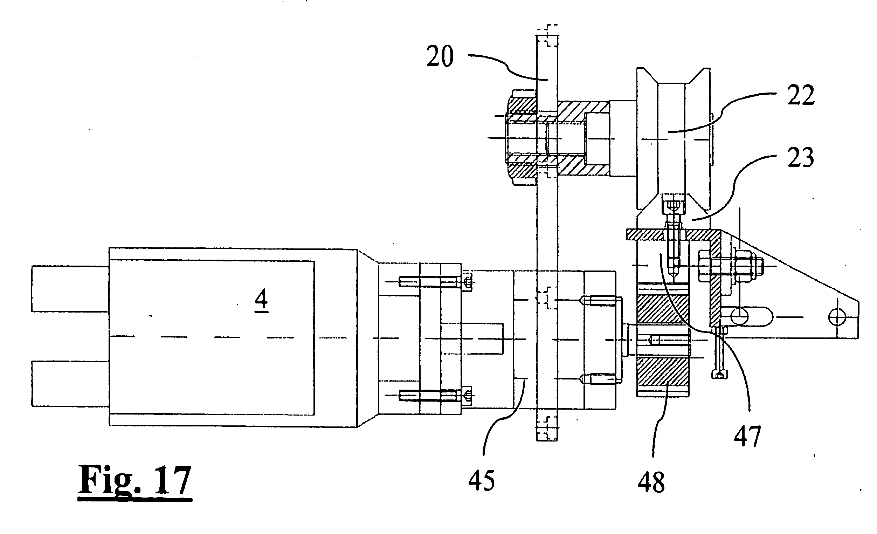

In an alternative embodiment, schematically illustrated in figure 5 and in greater detail in figure 17, the driving of the portal 2 is carried out by means of a rack and pinion system.

Such a rack and pinion system comprises a flat rack 47 fixedly associated with the side edge of the main table 10a. In this case, such a side edge has a flat bracket that supports the rail 23, with the lower face of which the flat rack 47 is associated.

The driving motor 4 is associated in this case with the outer side of the side upright 20, the axial speed reducer gearbox 45 associated with it crosses the upright and a drive pinion 48 set in rotation by the axial speed reducer gearbox 45 emerges from the inner side of the upright, going to engage under the flat rack 47.

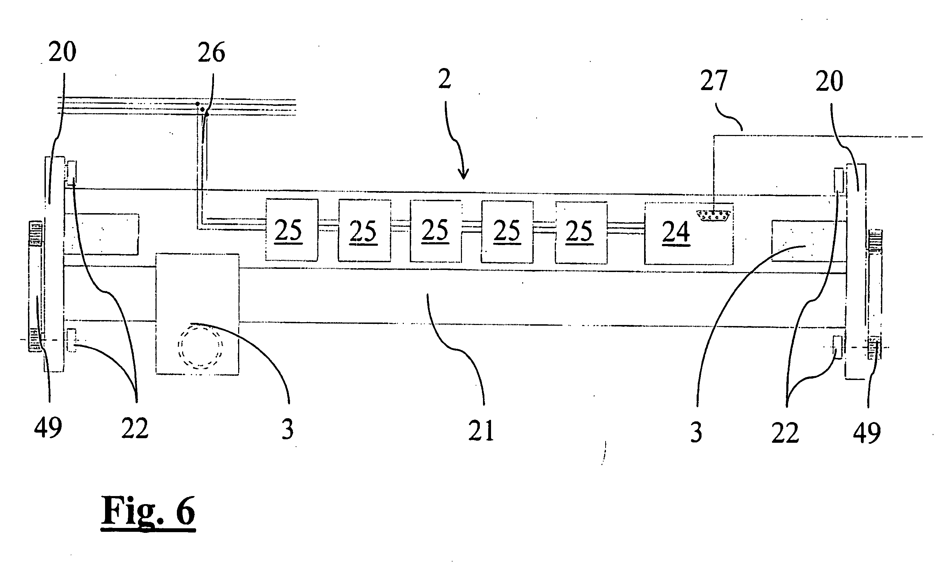

In yet another alternative embodiment, schematically illustrated in figure 6, the driving of the portal 2 is carried out by directly motorising the motion of one of the roller wheels 22.

The driving motor 4 is associated in this case with the inner side of the side upright 20 and actuates an outer transmission belt 49 that sets a drive axle in rotation to which one of the roller wheels 22 is fixedly connected.

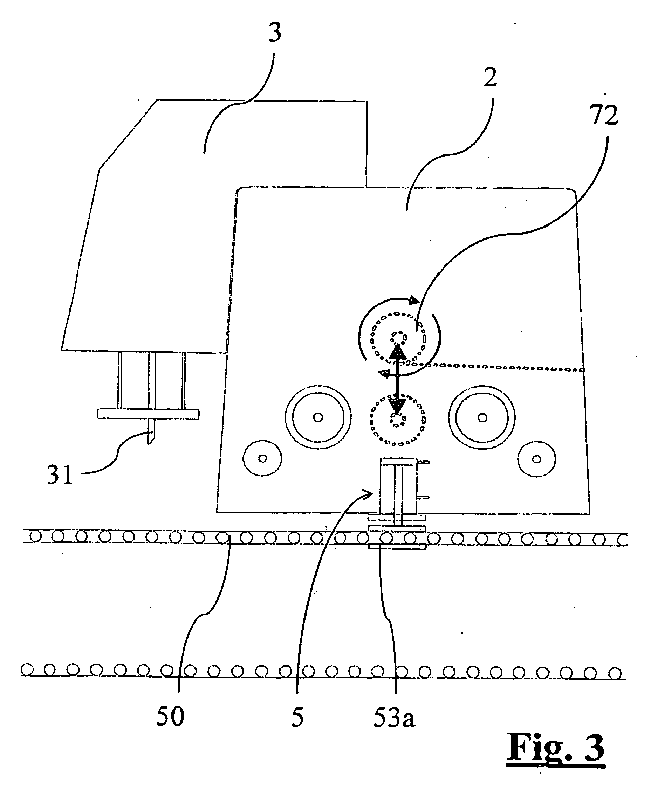

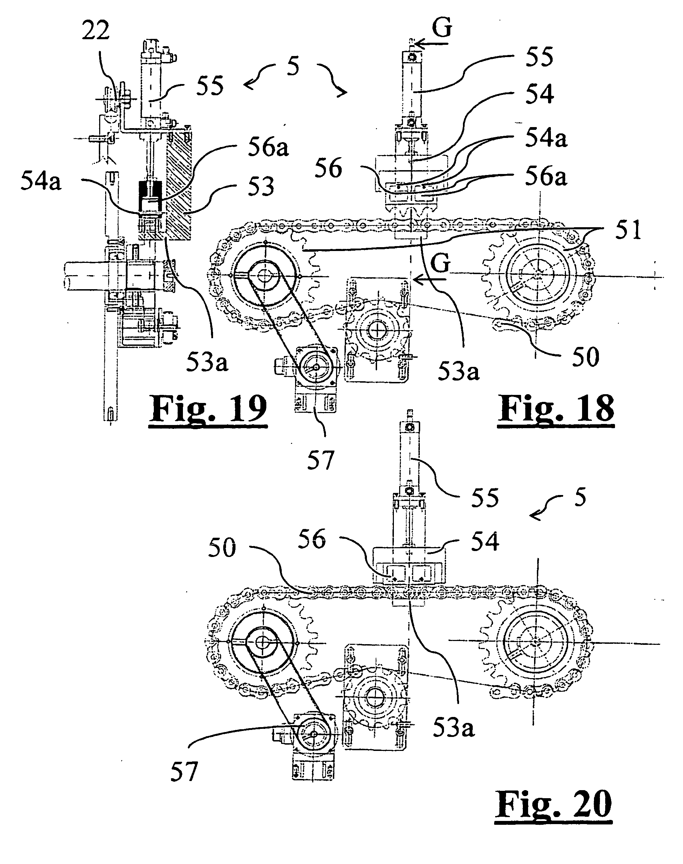

In the preferred embodiments described here, the main conveyor belt 14a does not have its own motorisation. Advantageously, the cutting machine 1 comprises engagement means, schematically illustrated in figure 3 and in greater detail in figures 18-20, which allow the portal 2 to be made temporarily fixedly connected to the main conveyor belt 14a, so that the driving of the belt can be obtained by carrying the portal 2 forwards.

Such engagement means comprise two side chains 50 and two holding clamps 5 intended to grip onto them.

The side chains 5 are fixedly connected to the main conveyor belt 14a and arranged at the side edges of the main table 10a. The main conveyor belt 14a indeed extends between two driving rollers 52 mounted on rotary axes, whereas the two side chains 50 extend between gear wheels 51 fitted to the opposite ends of such axes.

One of such rotary axes advantageously has measuring means associated with it, which allow the position of the material transported on the main conveyor belt 14a to be precisely calculated. In this case, such measuring means are in the form of an encoder 57 connected through a belt to one of the rotary axes.

The holding clamps 5 are arranged on-board the portal 2, and more specifically they are associated with the lower ends of the two side uprights 20. The holding clamps 5 are identical to one another in a mirroring fashion and they are arranged symmetrically with respect to the middle plane of the cutting machine 1.

Every holding clamp 5 comprises a fixed portion 53 that has a fixed lower abutment 53a above which one of the side chains 50 runs. The clamp also comprises a mobile portion 54 vertically mobile between a free position, visible in figure 18, and a locked position, visible in figure 20. The position of the mobile portion 54 is controlled by a linear actuator 55, preferably of the pneumatic type.

The mobile portion 54 of the holding clamp 5 comprises a mobile jaw 56, provided at the bottom with a toothing, intended to engage with the lateral chain 50 in the locked position. In the locked position, the lateral chain 50 is thus pressed between the fixed abutment 53a and the mobile jaw 56: the fixed connection between portal 2 and main conveyor belt 14a that allows the latter to be driven is thus made.

The mobile jaw 56 is arranged inside a lower impression of the main body of the mobile portion 54, which prevents its transversal movements but not the vertical or longitudinal ones (i.e. in the direction of extension of the lateral chain below). Two pins 54a fixedly connected to the main body of the mobile portion 54 extend between the opposite walls of the lower impression, crossing two transversal through holes 56a of the mobile jaw 56. The through holes 56a have a square section of substantially greater dimensions than that of the pins 54a, so that the pins 54a are housed with clearance inside the holes. The coupling between main body of the mobile portion 54 and mobile jaw 56 that allows longitudinal adjustments thereof in the position of the mobile jaw 56 when it is pressed against the lateral chain 50; such adjustments ensure a perfect engagement of the lower toothing of the mobile jaw 56 on the chain.

Mounted on-board the portal 2 there are advantageously all of the members necessary to control the portal 2 itself and the cutting head 3. As stated earlier, the driving motors 4 are associated with the side uprights 20. Moreover, the cross-member 21 is mounted with the CNC unit 24, as well as the drivers 25 intended to control the different electric motors that actuate the system: as well as the two driving motors 4, this concerns the motors responsible for moving the cutting head 3 transversally and for controlling the cutting tool 31 (rotation and alternate motion). The power supply 26 and signal 27 cables, the latter coming from an electronic interface processor preferably arranged near to the cutting machine, reach the portal.

The cutting machine 1 according to the present invention comprises means for unwinding the air-impermeable films above the cutting plane 11.

Indeed, in order to allow greater efficiency of the suction device 15, the sheets of material arranged on the cutting plane 11 are covered with a main impermeable film 6, which extends from a feeding reel 60 arranged at the feeding end 12 of the cutting plane 11.

During the cutting operation, the main impermeable film 6 is however inevitably lacerated, for which reason it is necessary to reposition it during the driving of the portal 2 with an auxiliary impermeable film 7.

The auxiliary impermeable film 7 extends for a longer section 7a from a first winder 70 arranged on-board the portal 2 up to a deviation roller 71 arranged at the feeding end 12 of the cutting plane 11, and for a shorter section 7b from the deviation roller up to a second winder 72, again on-board the portal 2.

The first winder 70 is fixed on the rear part of the cross-member 21, at a greater height with respect to the second winder 72.

The second winder 72 is arranged under the cross-member 21. It is associated with a linear actuator, not visible in the attached figures, which allows the second winder 72 to be lifted vertically. Such vertical lifting allows the auxiliary impermeable film to be disassociated from the cutting plane 11 to allow the entry of the material to be cut.

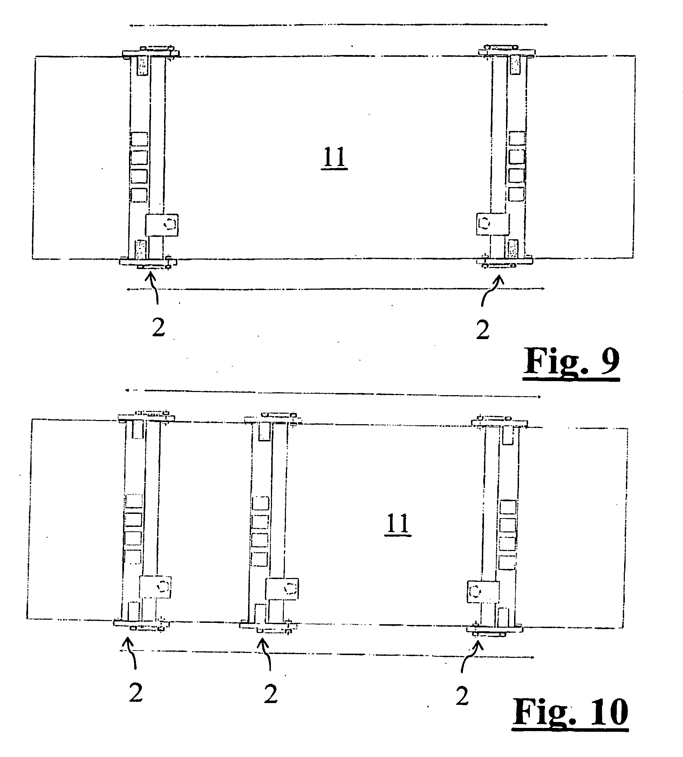

Alternative embodiments of the cutting machine according to the present invention, represented in the attached figures 9 and 10, comprise two or three portals, with the cutting heads 3 variously oriented, arranged above the same cutting plane 11. Such embodiments of the machine, which gain an advantage from the autonomous structure of the portal 2 described above, allow a substantial reduction of the cutting times.

Of course, a man skilled in the art can bring numerous modifications or variants to the finding described above, in order to satisfy contingent and specific requirements, all of which are in any case covered by the scope of protection of the invention as defined by the following claims.

## Claims

1. Automatic cutting machine (1) for sheet material, comprising: a fixed frame (10) that has a cutting plane (11); at least one portal (2) arranged astride of the cutting plane (11) and longitudinally mobile along it, said portal (2) comprising two side uprights (20) connected at the top by a cross-member (21) and a cutting head (3) mobile along said cross-member (21) so as to be able to operate on the cutting plane (11) below; motor means arranged to longitudinally translate said portal (2) with respect to said fixed frame (10) **characterised in that** said motor means comprise two driving motors (4) of the portal (2), arranged on-board the portal (2), each of said driving motors (4) being arranged at a respective side upright (20), wherein mounted on-board said portal (2) there is a CNC control unit (24) and the drivers (25) necessary to control all of the electrical actuation systems present on the portal (2).

2. Automatic cutting machine (1) according to claim 1, also comprising a transmission member arranged between each driving motor (4) and the fixed frame (10).

3. Automatic cutting machine (1) according to claim 2, wherein the driving motors (4) and the respective transmission members are arranged in a mirrored fashion with respect to a middle plane of the cutting machine (1).

4. Automatic cutting machine (1) according to one of claims 2 or 3, wherein each transmission member comprises at least one transmission pulley (41) arranged at a respective side upright (20), set in rotation by the driving motor (4) and it activates a driving belt (40) fixed along the fixed frame (10).

5. Automatic cutting machine (1) according to claim 4, wherein each of said motor members comprises two transmission pulleys (41) near each other and set in rotation by the driving motor (4).

6. Automatic cutting machine (1) according to one of claims 4 or 5, comprising deviation pulleys (42) arranged at the sides of said at least one transmission pulley (41) to guide the driving belt around said transmission pulley (41).

7. Automatic cutting machine (1) according to one of claims 2 or 3, wherein each of said transmission members comprises at least one drive pinion (48) engaged on a respective flat rack (47) fixed along the fixed frame (10).

8. Automatic cutting machine (1) according to one of claims 2 or 3, also comprising roller wheels (22) associated with each of said side uprights (20) and resting on rails (23) at the side of the cutting plane (11).

9. Automatic cutting machine (1) according to claim 8, wherein each of said transmission members comprises a transmission belt (49) that kinematically connects the driving motor (4) to one of said roller wheels (22).

10. Automatic cutting machine (1) according to one of the previous claims, also comprising a main conveyor belt (14a) the upper surface of which defines the cutting plane (11) and engagement means to make the portal (2) temporarily fixedly connected to the main conveyor belt (14a).

11. Automatic cutting machine (1) according to claim 10, wherein said engagement means comprise at least one lateral chain (50) rotating as a unit with the main conveyor belt (14a) and at least one holding clamp (5) fixedly connected to the portal (2) intended to grip hold of said at least one lateral chain (50).

12. Automatic cutting machine (1) according to claim 11, wherein said holding clamp (5) comprises a fixed lower abutment (53a) above which said lateral chain (50) runs and a mobile portion (54) vertically mobile between a free position and a locked position.

13. Automatic cutting machine (1) according to claim 12, wherein said mobile portion (54) comprises a mobile jaw (56), provided at the bottom with a toothing, intended to engage with the lateral chain (50) in the locked position.

14. Automatic cutting machine (1) according to claim 13, wherein said mobile jaw (56) is mounted with transversal clearance with respect to the rest of the mobile portion (54), so as to facilitate the engagement of the toothing on the lateral chain (50).

## Patentansprüche

1. Automatische Schneidvorrichtung (1) für blattförmiges Material, umfassend: einen festen Rahmen (10), der eine Schneidfläche (11) aufweist; mindestens ein Portal (2), das rittlings der Schneidfläche (11) und in Längsrichtung entlang dieser beweglich ist, wobei das Portal (2) zwei seitliche Ständer (20) umfasst, die an ihrem oberen Ende durch einen Querträger (21) miteinander verbunden sind und ein Schneidkopf (3), der entlang diesem Querträger (21) beweglich ist, so dass er auf der darunter angeordneten Schneidfläche (11) arbeiten kann; Antriebsmittel, die ausgebildet sind, um das Portal (2) in Längsrichtung relativ zu dem Rahmen (10) zu verfahren, **dadurch gekennzeichnet, dass** die Antriebsmittel zwei Antriebsmotoren (4) des Portals (2) umfassen, die auf dem Portal (2) angeordnet sind, wobei jeder der beiden Antriebsmotoren (4) an einem seitlichen Ständer (20) angeordnet ist, wobei auf dem Portal (2) eine CNC-Kontrolleinheit (24) und die Treiber (25), die erforderlich sind, um alle elektrischen Aktuatoren auf dem Portal (2) zu kontrollieren, vorgesehen sind.

2. Automatische Schneidvorrichtung (1) gemäß Anspruch 1, die weiterhin ein Übertragungsglied umfasst, das zwischen jedem der Antriebsmotoren (4) und dem festen Rahmen (10) angeordnet ist.

3. Automatische Schneidvorrichtung (1) gemäß Anspruch 2, wobei die Antriebsmotoren (4) und die entsprechenden Übertragungsglieder gespiegelt zu einer Mittelebene der Schneidvorrichtung (1) angeordnet sind.

4. Automatische Schneidvorrichtung (1) gemäß einem der Ansprüche 2 oder 3, wobei jedes Übertragungsglied mindestens eine Antriebsscheibe (41) umfasst, die auf dem entsprechenden seitlichen Ständer (20) angeordnet ist, die durch den Antriebsmotor (4) in Rotation versetzt wird und einen Antriebsriemen (40), der an dem festen Rahmen (10) befestigt ist, antreibt.

5. Automatische Schneidvorrichtung (1) gemäß Anspruch 4, wobei jeder der beiden Antriebsmotoren zwei Antriebsscheiben (41) umfasst, die dicht beieinander angeordnet sind und durch den Antriebsmotor (4) in Drehung versetzt werden.

6. Automatische Schneidvorrichtung (1) gemäß einem der Ansprüche 4 oder 5, die zwei Umlenkscheiben (42) umfasst, die an den Seiten der mindestens einen Antriebsscheibe (41) angeordnet sind, um den Antriebsriemen um die Antriebsscheibe (41) zu führen.

7. Automatische Schneidvorrichtung (1) gemäß einem der Ansprüche 2 oder 3, wobei jedes der Übertragungsglieder mindestens ein Antriebsritzel (48) aufweist, das in eine entsprechende Zahnstange (47) eingreift, welche entlang dem festen Rahmen (10) befestigt ist.

8. Automatische Schneidvorrichtung (1) gemäß einem der Ansprüche 2 oder 3, die weiterhin Rollen (22) aufweist, die mit jedem der beiden Ständer (20) verbunden sind und auf Schienen (23) an der Seite der Schneidplatte (11) laufen.

9. Automatische Schneidvorrichtung (1) gemäß Anspruch 8, wobei jedes der Übertragungsglieder einen Antriebsriemen (49) aufweist, der kinematisch den Antriebsmotor (4) mit einer der Rollen (22) verbindet.

10. Automatische Schneidvorrichtung (1) gemäß einem der vorhergehenden Ansprüche, die weiterhin einen Hauptantriebsriemen (14a), dessen obere Oberfläche die Schneidfläche (11) definiert, und Verbindungsmittel aufweist, um das Portal (2) zeitweise fest mit dem Hauptantriebsriemen (14a) zu verbinden.

11. Automatische Schneidvorrichtung (1) gemäß Anspruch 10, wobei die Verbindungsmittel mindestens eine seitliche Kette (50), die als Einheit mit dem Hauptantriebsriemen (14a) rotiert und mindestens eine Halteklemme (5) aufweist, die fest mit dem Portal (2) verbunden ist, um die mindestens eine seitliche Kette (50) fest zu greifen.

12. Automatische Schneidvorrichtung (1) gemäß Anspruch 11, wobei die Halteklemme (5) ein festes unteres Auflager (53a), über das die seitliche Kette (50) läuft und einen beweglichen Teil (54) aufweist, das vertikal zwischen einer freien Position und einer blockierten Position beweglich ist.

13. Automatische Schneidvorrichtung (1) gemäß Anspruch 12, wobei der bewegliche Teil (54) eine mobile Klemmbacke (56) aufweist, die an dem Boden mit einer Verzahnung versehen ist, die in der blockierten Position zum Eingriff in die seitliche Kette (50) ausgebildet ist.

14. Automatische Schneidvorrichtung (1) gemäß Anspruch 13, wobei die mobile Klemmbacke (56) mit seitlichem Freiraum relativ zu dem Rest des beweglichen Teils (54) eingebaut ist, um das Eingreifen der Verzahnung in die seitliche Kette (50) zu erleichtern.

## Revendications

1. Machine de découpe automatique (1) pour matériaux en feuilles, comprenant : un cadre fixe (10) présentant un plan de coupe (11) ; au moins un portique (2) disposé à cheval sur le plan de coupe (11) et mobile longitudinalement le long de celui-ci, ledit portique (2) comprenant deux montants latéraux (20) reliés dans le haut par une traverse (21) et une tête de coupe (3) mobile le long de ladite traverse (21) de sorte à pouvoir travailler dans le plan de coupe (11) situé en dessous ; des moyens moteurs disposés pour déplacer en translation longitudinale ledit portique (2) par rapport audit cadre fixe (10), **caractérisé en ce que** lesdits moyens moteurs comprennent deux moteurs d'entrainement (4) pour le portique (2), disposés à bord du portique (2), chacun desdits moteurs d'entraînement (4) étant disposé sur un montant latéral respectif (20), une unité de contrôle CNC (24) ainsi que les drivers (25) nécessaires pour contrôler l'ensemble des systèmes d'actionnement électriques présents sur le portique étant montés à bord dudit portique (2).

2. Machine de découpe automatique (1) selon la revendication 1, laquelle comprend également un organe de transmission disposé entre chaque moteur d'entraînement (4) et le cadre fixe (10)

3. Machine de découpe automatique (1) selon la revendication 2, dans laquelle les moteurs d'entraînement (4) et les organes de transmission correspondants sont disposés selon une symétrie de miroir par rapport à un plan médian de la machine de découpe (1).

4. Machine de découpe automatique (1) selon l'une des revendications 2 ou 3, dans laquelle chaque organe de transmission comprend au moins une poulie de transmission (41) disposée sur un montant latéral respectif (20), entrainée en rotation par le moteur d'entraînement (4) et qui actionne une courroie d'entraînement (40) fixée le long du cadre fixe (10).

5. Machine de découpe automatique (1) selon la revendication 4, dans laquelle chacun desdits organes moteurs comprend deux poulies de transmission (41) situées à proximité l'une de l'autre et entraînées en rotation par le moteur d'entraînement (4).

6. Machine de découpe automatique (1) selon l'une des revendications 4 ou 5, comprenant des poulies de déviation (42) disposées sur le côté de la au moins une poulie de transmission (41) afin de guider la courroie d'entraînement autour de ladite poulie de transmission (41).

7. Machine de découpe automatique (1) selon l'une des revendications 2 ou 3, dans laquelle chacun des organes de transmission comprend au moins un pignon d'entraînement (48) engagé sur une crémaillère (47) correspondante fixée le long du cadre fixe (10).

8. Machine de découpe automatique (1) selon l'une des revendications 2 ou 3, comprenant également des galets de roulement (22) qui sont reliés à chacun desdits montants latéraux (20) et qui reposent sur des rails (23) sur le côté du plan de coupe (11).

9. Machine de découpe automatique (1) selon la revendication 8, dans laquelle chacun des organes de transmission comprend une courroie de transmission (49) qui relie de façon cinématique le moteur d'entraînement (4) à l'un desdits galets de roulement (22).

10. Machine de découpe automatique (1) selon l'une des revendications précédentes, comprenant également une courroie de convoyage principale (14a) dont la surface supérieure définit le plan de coupe (11) et des moyens d'engagement pour connecter fixement de façon temporaire le portique (2) à la bande de convoyage principale (14a).

11. Machine de découpe automatique (1) selon la revendication 10, dans laquelle lesdits moyens d'engagement comprennent au moins une chaîne latérale (50) tournant en formant une unité avec la courroie de convoyage principale (14a) et au moins une pince de retenue (5) reliée fixement au portique (2) et destinée à saisir fermement ladite au moins une chaîne latérale (50).

12. Machine de découpe automatique (1) selon la revendication 11, dans laquelle ladite pince de retenue (5) comprend une butée inférieure fixe (53a) au-dessus de laquelle court ladite chaîne latérale (50) et une portion mobile (54) pouvant se déplacer verticalement entre une position libre et une position bloquée.

13. Machine de découpe automatique (1) selon la revendication 12, dans laquelle ladite portion mobile (54) comprend une mâchoire mobile (56) munie dans le bas d'une denture destinée à engager ladite chaîne latérale (50) dans la position bloquée.

14. Machine de découpe automatique (1) selon la revendication 13, dans laquelle ladite mâchoire mobile (56) est montée avec un jeu transversal par rapport au reste de la portion mobile (54) de sorte à faciliter l'engagement de la denture sur la chaîne latérale (50).
